# FASCICULE DE BREVET EUROPEEN

(11) **EP 0 565 423 B1**
(45) Date de publication et mention de la délivrance du brevet: **27.09.1995**
(21) Numéro de dépôt: 93400878.0
(22) Date de dépôt: 05.04.1993
(51) Int. Cl.: H05H 1/36

(54) **Système pour le pilotage d'une torche à plasma**
Steuereinrichtung für einen Plasmabrenner
System for controlling a plasma torch

(30) Priorité: 10.04.1992 FR 9204438
(43) Date de publication de la demande: 13.10.1993
(73) Titulaire: AEROSPATIALE Société Nationale Industrielle, 75781 Paris Cédex 16 (FR)
(72) Inventeur: Lambert, Jean-Marie, F-33160 Saint Medard en Jalles (FR)
(74) Mandataire: Bonnetat, Christian

(56) Documents cités:
- EP-A- 0 223 633
- DE-A- 3 532 367
- FR-A- 2 142 142
- US-A- 3 819 840
- US-A- 4 122 327
- US-A- 4 663 515
- US-A- 4 692 584

## Description

La présente invention concerne un système pour le pilotage d'une torche à plasma de puissance.

Par le brevet français FR-A-2 588 145, on connaît déjà un système de pilotage d'une torche à plasma de puissance comportant :
- un redresseur, alimenté par un réseau électrique et fournissant une tension continue d'alimentation aux électrodes de ladite torche ;
- un circuit alimentant ladite torche en gaz plasmagène, le débit dudit gaz étant sous la dépendance d'une vanne de régulation ; et
- des moyens de contrôle dudit redresseur et de ladite vanne pour commander le courant d'arc et le débit de gaz plasmagène.

En réalité, un tel système de pilotage n'est destiné qu'à éviter le soufflage de l'arc. On sait en effet que, dans une torche à plasma, l'intensité d'arc diminue, lorsque la tension d'arc croît et vice-versa. Puisque la tension d'arc est limitée supérieurement par les performances en tension du redresseur d'alimentation de la torche, l'arc devient instable dès que la tension d'arc croît en s'approchant de la tension maximale susceptible d'être délivrée par ledit redresseur d'alimentation.

Aussi, dans le brevet précité, lesdits moyens de contrôle sont constitués par un dispositif électronique, comportant simplement un détecteur de seuil de tension d'arc et un amplificateur à gain variable, destiné à faire baisser la tension d'arc, dès que celle-ci atteint un seuil d'instabilité, en faisant croître momentanément le courant d'arc et en diminuant le débit de gaz plasmagène alimentant ladite torche à plasma. Il s'agit donc là d'un système figé, ne permettant que la stabilisation de l'arc.

La présente invention a pour objet un système souple, permettant non seulement la stabilisation de l'arc, mais encore le pilotage total et automatique de la torche pour obliger celle-ci à fonctionner en respectant une ou plusieurs données de consigne.

A cette fin, selon l'invention, le système pour le pilotage d'une torche à plasma de puissance comportant :
- un redresseur, alimenté par un réseau électrique et fournissant une tension continue d'alimentation aux électrodes de ladite torche ;
- un circuit alimentant ladite torche en gaz plasmagène, le débit dudit gaz étant sous la dépendance d'une vanne de régulation ;
- des moyens de contrôle dudit redresseur et de ladite vanne pour commander le courant d'arc et le débit de gaz plasmagène ;
- des premiers moyens pour mesurer en continu la tension d'arc ; et
- des deuxièmes moyens pour mesurer en continu l'intensité d'arc,

est remarquable :
- en ce que ladite vanne de régulation du gaz plasmagène est du type à commande pneumatique et est commandée par un positionneur électropneumatique associé à un amplificateur de débit pneumatique ; et
- en ce que lesdits moyens de contrôle, d'une part, reçoivent les mesures de tension d'arc et d'intensité d'arc délivrées respectivement par lesdits premiers et deuxièmes moyens de mesure et, d'autre part, délivrent respectivement audit redresseur et audit positionneur électropneumatique des valeurs de consigne d'intensité d'arc et de débit de gaz plasmagène, calculées selon un programme, en fonction d'une puissance électrique de consigne.

Ainsi, il est possible de piloter ladite torche à plasma en puissance, en commandant en continu l'intensité d'arc et le débit de gaz plasmagène. On remarquera que, grâce au choix d'une vanne de régulation du débit du gaz plasmagène à commande pneumatique, commandée par un positionneur électro-pneumatique associé à un amplificateur de débit pneumatique, on rend compatibles les variations d'ouverture et de fermeture de la vanne avec les variations des valeurs de consigne délivrées par lesdits moyens de contrôle. En effet, grâce à l'amplificateur de débit, qui agit comme un accélérateur, on abaisse fortement le temps de réponse de ladite vanne à l'ouverture et à la fermeture.

Lesdits moyens de contrôle peuvent être constitués par un calculateur ou bien par un automate. Ils assurent la mise en marche de la torche à une puissance prédéterminée et ils contrôlent l'augmentation ou la diminution de puissance en pilotant l'intensité d'arc et le débit de gaz plasmagène. Lorsque la puissance électrique réelle de la torche est voisine de ladite puissance électrique de consigne, lesdits moyens de contrôle assurent une régulation permanente par contrôle de l'intensité d'arc et du débit de gaz plasmagène, tout en contrôlant la tension d'arc, pour éviter le soufflage de l'arc.

Lesdits moyens de contrôle travaillent séquentiellement, selon des cycles dont la durée est par exemple égale à quelques secondes, avec cependant intervention prioritaire immédiate sur l'intensité d'arc et le débit de gaz plasmagène en cas de risque de soufflage de l'arc.

Ladite puissance électrique de consigne peut être choisie, par un opérateur ou par un calculateur superviseur prenant en compte les paramètres d'un procédé à piloter dans lequel intervient ladite torche à plasma, et entrée dans lesdits moyens de contrôle. Toutefois, à cause des pertes thermiques intervenant dans le fonctionnement de la torche, il peut se faire que la puissance thermique fournie réellement par la torche soit inférieure à celle qui correspond théoriquement à ladite puissance électrique de consigne affichée.

Aussi, selon une variante de réalisation, le système conforme à la présente invention comporte des moyens de mesure supplémentaires pour déterminer le débit, la température d'entrée et la température de sortie du fluide (eau déminéralisée par exemple) de refroidissement de la torche, ces moyens de mesure supplémentaires fournissant leurs mesures auxdits moyens de contrôle. Le débit du fluide de refroidissement, associé auxdites températures d'entrée et de sortie, permet de déterminer une première approximation des pertes thermiques dans la torche, de sorte que lesdits moyens de contrôle peuvent en tenir compte pour élaborer la puissance électrique de consigne à partir d'une puissance thermique de consigne.

Ainsi, la puissance électrique de consigne tient compte de pertes intervenant dans le fonctionnement de la torche et on obtient une puissance thermique conforme à celle désirée.

Pour améliorer encore la précision de la puissance thermique réelle obtenue, on peut prévoir des sixièmes, septièmes et huitièmes moyens de mesure supplémentaires qui déterminent le débit, la température et la pression du gaz plasmagène dans ledit circuit et qui fournissent leurs mesures auxdits moyens de contrôle, qui en tiennent compte dans l'élaboration de ladite puissance électrique de consigne à partir de ladite puissance thermique de consigne. On tient ainsi compte de l'enthalpie du gaz plasmagène.

Ladite puissance thermique de consigne peut être choisie, par un opérateur ou par un calculateur superviseur prenant en compte les paramètres d'un procédé à piloter, et entrée dans lesdits moyens de contrôle.

Par ailleurs, on sait que, dans de nombreux procédés industriels, une torche à plasma est utilisée pour surchauffer un vent primaire qui est injecté à une tuyère (par exemple de haut fourneau, de cubilot, etc ...). Le débit de vent primaire ainsi que la température de celui-ci sont variables dans le temps, ce qui a pour effet de faire varier la température du lit de fusion dans des proportions souvent néfastes à la stabilisation de marche du procédé et du produit élaboré.

Aussi, il est nécessaire d'assurer, en profitant de la souplesse et de la rapidité de montée en puissance de la torche, une température constante au mélange du vent et du plasma, dans les limites de puissance électrique disponible.

Pour une telle application, il est donc avantageux de prévoir des neuvièmes, dixièmes et onzièmes moyens de mesure supplémentaires qui déterminent le débit, la température et la pression dudit vent et qui fournissent leurs mesures auxdits moyens de contrôle qui élaborent ladite puissance thermique de consigne, puis ladite puissance électrique de consigne, à partir d'une température de consigne pour ledit vent chauffé par le plasma de ladite torche.

De préférence, une telle température de consigne est choisie, par un opérateur ou par un calculateur superviseur prenant en compte les paramètres d'un procédé à piloter, et entrée dans lesdits moyens de contrôle.

Les figures du dessin annexé feront bien comprendre comment l'invention peut être réalisée. Sur ces figures, des références identiques désignent des éléments semblables.

La figure 1 est un schéma d'un mode de réalisation du système conforme à la présente invention.

La figure 2 est une coupe d'un amplificateur de débit pneumatique connu, mis en oeuvre dans la présente invention.

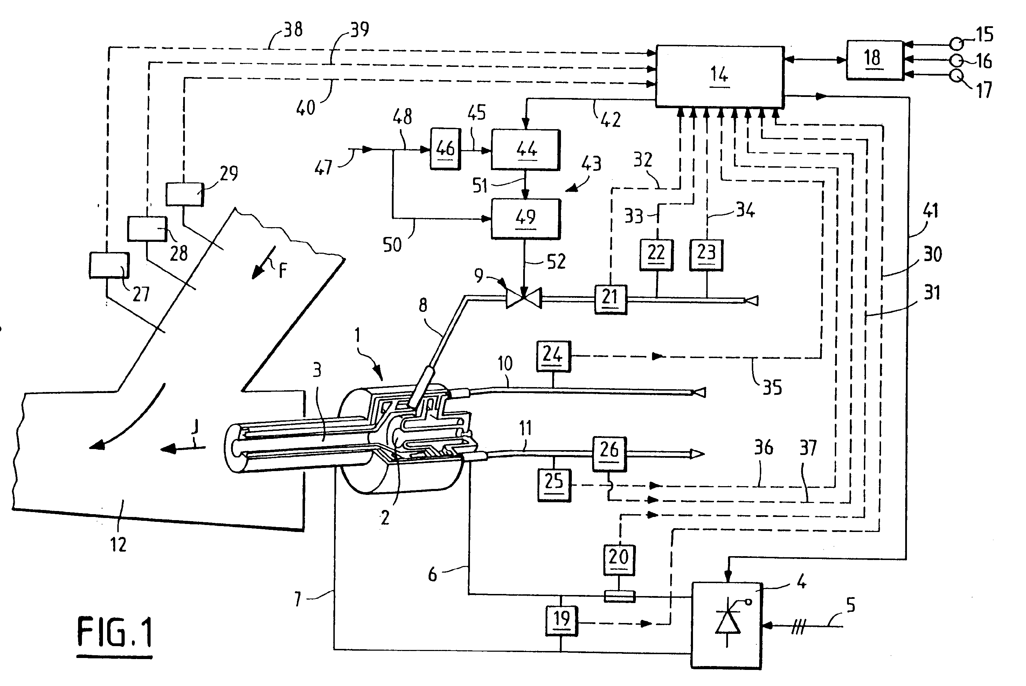

Le système de pilotage, conforme à la présente invention et représentée par la figure 1, est destiné à une torche à plasma de puissance 1 comportant une électrode amont 2 et une électrode aval 3 entre lesquelles se produit un arc électrique. Pour ce faire, on applique entre lesdites électrodes 2 et 3 une tension engendrée par un redresseur 4, alimenté à partir d'un réseau 5. Les électrodes 2 et 3 sont reliées à cet effet au redresseur 4 respectivement par des liaisons 6 et 7.

La torche 1 est alimentée en gaz plasmagène (par exemple de l'air sous pression) par un circuit 8, sur lequel est montée une vanne de régulation de débit 9, à commande pneumatique. Cette vanne est par exemple du type Camflex, fabriquée par la Société française MASONEILAN.

La torche 1 est de plus parcourue par un fluide de refroidissement, par exemple de l'eau déminéralisée, entrant par une canalisation 10 et sortant par une canalisation 11.

Dans l'exemple représenté sur la figure 1, la torche 1 est destinée à réchauffer un vent de haut fourneau (symbolisé par la flèche F). Pour cela, ledit vent et le jet de plasma (symbolisé par la flèche J) soufflé par la torche 1 sont mis en contact dans une tuyère de mélange 12.

Le système de pilotage comporte des moyens de contrôle à programme 14, par exemple un calculateur ou un automate, pour le pilotage de la torche 1. Un opérateur ou un calculateur superviseur de procédé (non représentés) peut introduire dans les moyens de contrôle 14 des valeurs de consigne désirées par affichage à des entrées 15,16,17 d'un dispositif d'interface 18. Les entrées 15, 16 et 17 permettent d'afficher, par exemple, des valeurs de consigne pour la puissance électrique, la puissance thermique et la température du mélange vent-jet de plasma.

Par ailleurs, le système de pilotage comporte :
- un appareil 19 pour la mesure de la tension d'arc Ua, disposé entre les liaisons 6 et 7 ;
- un appareil 20 pour la mesure de l'intensité d'arc Ia, disposé sur la liaison 6 ;
- un appareil 21 pour la mesure du débit Qa de gaz plasmagène, disposé sur le circuit 8 ;
- un appareil 22 pour la mesure de la température Ta du gaz plasmagène du circuit 8 ;
- un appareil 23 pour la mesure de la pression Pa du gaz plasmagène dans le circuit 8 ;
- un appareil 24 pour la mesure de la température Te du fluide de refroidissement arrivant par la canalisation 10 ;
- un appareil 25 pour la mesure de la température Ts du fluide de refroidissement sortant par la canalisation 11 ;
- un appareil 26 pour la mesure du débit Qe du fluide de refroidissement dans la canalisation de sortie 11 ;
- un appareil 27 pour la mesure de la température Tv du vent F ;
- un appareil 28 pour la mesure de la pression Pv du vent F ; et
- un appareil 29 pour la mesure du débit Qv dudit vent F.

Chacun des appareils de mesure 19 à 29 est relié aux moyens de contrôle 14 par l'intermédiaire d'une liaison, portant la référence 30 à 40, respectivement.

Ainsi, lesdits moyens de contrôle 14 connaissent en permanence la valeur des mesures des paramètres Ua, Ia, Qa, Pa, Te, Ts, Qe, Tv, Pv et Qv.

Par ailleurs, par des liaisons électriques 41 et 42 respectivement, lesdits moyens de contrôle 14 commandent le redresseur 4 et la vanne 9.

La commande de la vanne 9 par lesdits moyens de contrôle 14 s'effectue par l'intermédiaire d'un dispositif de commande 43 à accélérateur pneumatique.

Le dispositif de commande 43 comporte un positionneur de vanne électropneumatique 44, recevant, d'une part les ordres électriques engendrés par lesdits moyens de contrôle 14 (à travers la liaison 42) et, d'autre part, une alimentation pneumatique à faible pression par une conduite 45. A titre d'exemple, le positionneur électropneumatique 44 peut être du type 8013, fabriqué par la Société française MASONEILAN, et la pression de l'alimentation pneumatique traversant la conduite 45 peut être de l'ordre de 1,4 bar. Cette alimentation pneumatique à faible pression peut provenir d'un détendeur 46 recevant lui-même une alimentation pneumatique à haute pression et débit élevé d'une source 47, par l'intermédiaire d'une conduite 48. La pression pneumatique de la source 47 est par exemple de l'ordre de 7 bars.

Entre le positionneur électropneumatique 44 et la vanne 9 est interposé un amplificateur de débit 49, qui, lui-même, commande la vanne 9. L'amplificateur 49 reçoit la haute pression par une conduite 50 le reliant à la source 47 et la basse pression de commande par une conduite 51 le reliant au positionneur électropneumatique 44. Il commande la vanne 9 par une conduite 52.

L'amplificateur de débit 49 de commande de la vanne 9 est par exemple du type 61, fabriqué par la Société française MAREG.

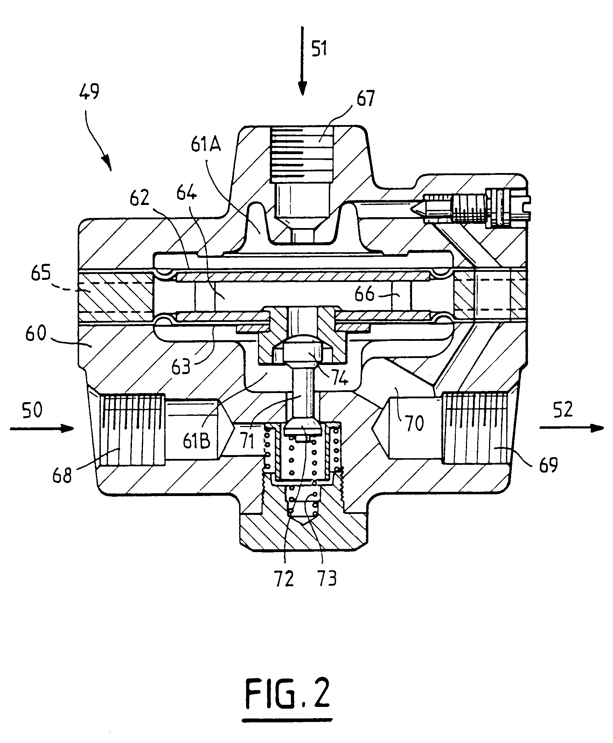

Le schéma d'un tel amplificateur de débit est montré par la figure 2.

L'amplificateur de débit 49 connu, montré par cette figure, comporte un corps 60, définissant un volume interne partagé en deux chambres 61A et 61B par un agencement de deux membranes 62,63. Les deux membranes 6'2 et 63, parallèles, délimitent entre elles un espace 64 communiquant avec l'extérieur par un passage 65. Les deux membranes 62 et 63 sont liées mécaniquement entre elles par des entretoises 66, mais elles peuvent se déformer dans une certaine mesure, l'une par rapport à l'autre.

Un raccord 67 permet de relier la chambre 61A à la conduite basse pression 51, reliant l'amplificateur de débit 49 au positionneur électropneumatique 44.

Des raccords 68 et 69 sont prévus pour la liaison à la conduite haute pression 50 et à la conduite 52, respectivement. Le raccord 69 communique directement avec la chambre 61B par un passage 70. En revanche, le raccord 68 communique avec la chambre 61B par l'intermédiaire d'un pointeau 71 pourvu d'une première soupape 72 à l'une de ses extrémités et pressé par un ressort 73. L'autre extrémité du pointeau 71 est pourvue d'une seconde soupape 74, commandant la communication entre la chambre 61B et l'espace 64.

Lorsqu'aucune basse pression de commande n'est appliquée à travers la conduite 51, l'amplificateur 49 se trouve dans la position illustrée par la figure 2, c'est-à-dire que la soupape 72 interrompt la communication entre la conduite 50 et la chambre 61B (de sorte que la conduite de sortie 52 est isolée de la conduite 50) et que la soupape 74 interrompt la communication entre la chambre 61B et l'espace 64.

Si un ordre de basse pression de commande est appliqué par le positionneur 44 dans la conduite 51, les membranes 62 et 63 pressent le pointeau 71, à l'encontre de l'action du ressort 73, ouvrant la soupape 72 (la soupape 74 restant fermée) et établissant une communication entre les conduites 50 et 52, par l'intermédiaire de la chambre 61B et du passage 70. L'ouverture de la soupape 72 s'effectue jusqu'à ce que la pression dans la chambre 61B et la conduite 52 soit suffisante pour équilibrer l'ordre de basse pression de commande de la conduite 51. Puisque le signal de pression dans la conduite 52 est obtenu à partir de la conduite 50, c'est-à-dire à partir de la source 47 à haute pression et grand débit, il est rapide. L'accélérateur 49 accélère donc le temps de réponse à l'ouverture de la vanne 9 à commande pneumatique.

Maintenant, si la pression de l'ordre de basse pression dans la conduite 51 diminue alors que la soupape 72 est ouverte de la façon décrite ci-dessus, les membranes 62 et 63 se déplacent en direction du raccord 67, ouvrant la soupape 74. La chambre 61B est donc mise à l'échappement par l'intermédiaire de l'espace 64 et du passage 65, de sorte que la pression dans la conduite 52 est réduite jusqu'à ce qu'elle vienne à nouveau équilibrer la pression d'entrée dans la conduite 51.

Là encore, l'amplificateur 49 accélère donc le temps de réponse à la fermeture de la vanne 9 à commande pneumatique, grâce à une mise à l'échappement rapide.

Grâce à l'amplificateur 49, le temps de réponse de la vanne 9, qui est généralement de l'ordre de 1 seconde, peut être ramené, tant à l'ouverture qu'à la fermeture, à environ 200 ms.

Le système de la figure 1 peut fonctionner selon trois modes :
A/ Dans le premier mode, un opérateur ou un calculateur superviseur de procédé affiche sur l'entrée 15 une puissance électrique de consigne désirée. Dans ce cas, à partir des paramètres Ua et Ia, respectivement fournis par les appareils 19 et 20, et à partir de cette puissance électrique de consigne affichée sur l'entrée 15, les moyens de contrôle 14 calculent séquentiellement des ordres électriques de commande pour le redresseur 4 et pour la vanne 9, qui apparaissent sur les liaisons 41 et 42. L'ordre électrique de la liaison 42 est transformé en ordre pneumatique par le positionneur 44 et appliqué sur la vanne 9 par l'intermédiaire de l'amplificateur de débit, ou accélérateur, 49.
B/ Dans le second mode, l'opérateur ou le calculateur superviseur de procédé affiche sur l'entrée 16 une puissance thermique de consigne désirée. Les moyens de contrôle 14 reçoivent alors, en plus des paramètres Ua et Ia, les paramètres Qa, Ia, Pa, Te, Ts et Qe, définis respectivement par les appareils 21, 22, 23, 24, 25 et 26. A partir de l'ensemble de ces paramètres et de la puissance thermique de consigne affichée, les moyens de contrôle 14 déterminent une puissance électrique de consigne et élaborent séquentiellement les ordres électriques de commande pour le redresseur 4 et la vanne 9, ordres qui sont appliqués comme décrit ci-dessus.
C/ Dans le troisième mode de fonctionnement, l'opérateur ou le calculateur superviseur de procédé affiche sur l'entrée 17 une température de consigne désirée pour le vent F chauffé par le jet de plasma J. Les moyens de contrôle 14 reçoivent, en plus des paramètres mentionnés sous B/, les paramètres Tv, Pv et Qv, respectivement fournis par les appareils 27, 28 et 29. A partir de l'ensemble desdits paramètres et de la température de consigne affichée, les moyens de contrôle 14 déterminent une puissance thermique de consigne, et par suite la puissance électrique de consigne à appliquer, et élaborent séquentiellement les ordres électriques de commande pour le redresseur 4 et la vanne 9, appliqués comme ci-dessus.

A des fins d'information, on donne ci-après des exemples de valeurs pour les paramètres de la torche à plasma pilotée par le système conforme à la présente invention :
- intensité d'arc : de 100 A à 2500 A ;
- tension d'arc : de 300 V à 5000 V ;
- puissance : de 50 kW (KW) à 12,5 MW ;
- pression interne de la torche : de 0,1 bar à 7 bars ;
- débit de gaz plasmagène : de 40 Nm³h à 2500 Nm³h, sous des pressions de 4 à 15 bars.

## Revendications

1. Système pour le pilotage d'une torche à plasma de puissance (1) comportant :
- un redresseur (4), alimenté par un réseau électrique (5) et fournissant une tension continue d'alimentation aux électrodes (2,3) de ladite torche ;
- un circuit (8) alimentant ladite torche en gaz plasmagène, le débit dudit gaz étant sous la dépendance d'une vanne de régulation (9) ;
- des moyens de contrôle (14) dudit redresseur et de ladite vanne pour commander le courant d'arc et le débit de gaz plasmagène ;
- des premiers moyens (19) pour mesurer en continu la tension d'arc ; et
- des deuxièmes moyens (20) pour mesurer en continu l'intensité d'arc,
caractérisé :
- en ce que ladite vanne (9) de régulation du gaz plasmagène est du type à commande pneumatique et est commandée par un positionneur électropneumatique (44) associé à un amplificateur de débit pneumatique (49) ; et
- en ce que lesdits moyens de contrôle (14), d'une part, reçoivent les mesures de tension d'arc et d'intensité d'arc délivrées respectivement par lesdits premiers et deuxièmes moyens de mesure (19,20) et, d'autre part, délivrent respectivement audit redresseur (4) et audit positionneur électropneumatique (49) des valeurs de consigne d'intensité d'arc et de débit de gaz plasmagène, calculées selon un programme, en fonction d'une puissance électrique de consigne.

2. Système selon la revendication 1,
caractérisé en ce que ladite puissance électrique de consigne est choisie et entrée dans lesdits moyens de contrôle (14).

3. Système selon la revendication 1, dans lequel ladite torche (1) est refroidie par la circulation d'un fluide de refroidissement,
caractérisé en ce qu'il comporte des troisièmes, quatrièmes et cinquièmes moyens de mesure supplémentaires (24,25,26) pour déterminer le débit, la température d'entrée dans la torche et la température de sortie de la torche dudit fluide de refroidissement et qui fournissent leurs mesures auxdits moyens de contrôle (14), qui élaborent ladite puissance électrique de consigne à partir d'une puissance thermique de consigne.

4. Système selon la revendication 3,
caractérisé en ce qu'il comporte des sixièmes, septièmes et huitièmes moyens de mesure supplémentaires (21,22,23) qui déterminent le débit, la température et la pression du gaz plasmagène dans ledit circuit (8) et qui fournissent leurs mesures auxdits moyens de contrôle (14), qui en tiennent compte dans l'élaboration de ladite puissance électrique de consigne à partir de ladite puissance thermique de consigne.

5. Système selon l'une quelconque des revendications 3 ou 4,
caractérisé en ce que ladite puissance thermique de consigne est choisie et entrée dans lesdits moyens de contrôle (14).

6. Système selon l'une quelconque des revendications 3 ou 4,
dans lequel ladite torche est utilisée pour chauffer un vent (F),
caractérisé en ce qu'il comporte des neuvièmes, dixièmes et onzièmes moyens de mesure supplémentaires (27,28,29) qui déterminent le débit, la température et la pression dudit vent et qui fournissent leurs mesures auxdits moyens de contrôle (14) qui élaborent ladite puissance thermique de consigne à partir d'une température de consigne pour ledit vent chauffé par le plasma de ladite torche.

7. Système selon la revendication 6,
caractérisé en ce que ladite température de consigne est choisie et entrée dans lesdits moyens de contrôle (14).

## Patentansprüche

1. System zur Steuerung eines Leistungsplasmabrenners (1) mit:
- einem Gleichrichter (4), der durch Netzstrom (5) gespeist wird und eine Gleichspannung zur Speisung der Elektroden (2,3) des Brenners abgibt;
- einer Leitung (8), durch die der Brenner mit plasmabildendem Gas versorgt wird, wobei der Durchsatz des Gases von einem Stellventil (9) abhängig ist;
- Kontrollmitteln (14) des Gleichrichters und des Ventils zur Steuerung des Lichtbogenstroms und des Durchsatzes des plasmabildendes Gases;
- ersten Mitteln (19) zur kontinuierlichen Messung der Lichtbogenspannung; und
- zweiten Mitteln (20) zur kontinuierlichen Messung des Lichtbogenstroms,
dadurch gekennzeichnet:
- daß das Ventil (9) zur Regelung des plasmabildenden Gases von der Art mit pneumatischer Steuerung ist und durch ein elektropneumatisches Stellglied (44) in Verbindung mit einem pneumatischen Durchsatzverstärker (49) gesteuert wird; und
- daß an die Kontrollmittel (14) einerseits die Meßwerte der Lichtbogenspannung und des Lichtbogenstroms aus den ersten bzw. zweiten Meßmitteln (19,20) gelangen und daß diese andererseits an den Gleichrichter (4) bzw. das elektropneumatische Stellglied (49) Sollwerte für Lichtbogenstrom und Durchsatz des plasmabildenden Gases abgeben, die nach einem Programm in Abhängigkeit von einem Sollwert der elektrischen Leistung berechnet werden.

2. System nach Anspruch 1,
dadurch gekennzeichnet, daß der Sollwert der elektrischen Leistung ausgewählt und in die Kontrollmittel (14) eingegeben wird.

3. System nach Anspruch 1, bei dem der Brenner (1) durch das Strömen eines Kühlmediums gekühlt wird,
dadurch gekennzeichnet, daß es dritte, vierte und fünfte zusätzliche Meßmittel (24,25,26) zur Bestimmung von Kühlmitteldurchsatz, Eintrittstemperatur des Kühlmittels in den Brenner und Austrittstemperatur des Kühlmittels aus dem Brenner und zur Abgabe der Meßwerte an die Kontrollmittel (14) hat, die aus einem Sollwert der Wärmeleistung den Sollwert der elektrischen Leistung erarbeiten.

4. System nach Anspruch 3,
dadurch gekennzeichnet, daß es sechste, siebente und achte zusätzliche Meßmittel (21,22,23) zur Bestimmung von Durchsatz, Temperatur und Druck des plasmabildenden Gases in der Leitung (8) und zur Abgabe ihrer Meßwerte an die Kontrollmittel (14) hat, die diese bei der Erarbeitung des Sollwerts der elektrischen Leistung aus dem Sollwert der Wärmeleistung berücksichtigen.

5. System nach einem der Ansprüche 3 oder 4,
dadurch gekennzeichnet, daß der Sollwert der Wärmeleistung ausgewählt und in die Kontrollmittel (14) eingegeben wird.

6. System nach einem der Ansprüche 3 oder 4, bei dem der Brenner zur Erhitzung von Luft (F) verwendet wird,
dadurch gekennzeichnet, daß es neunte, zehnte und elfte zusätzliche Meßmittel (27,28,29) zur Bestimmung von Durchsatz, Temperatur und Druck der Luft und zur Abgabe ihrer Meßwerte an die Kontrollmittel (14) hat, die für die durch das Brennerplasma erhitzte Luft den Sollwert der Wärmeleistung aus einem Temperatur-Sollwert erarbeiten.

7. System nach Anspruch 6,
dadurch gekennzeichnet, daß der Temperatur-Sollwert ausgewählt und in die Kontrollmittel (14) eingegeben wird.

## Claims

1. System for controlling a power plasma torch (1), including:
- a rectifier (4) fed by an electrical mains (5) and supplying a DC supply voltage to the electrodes (2, 3) of said torch;
- a circuit (8) feeding said torch with plasma-generating gas, the flow rate of said gas being controlled by a regulating valve (9);
- means (14) for controlling said rectifier and said valve in order to control the arc current and the plasma-generating-gas flow rate;
- first means (19) for continuously measuring the arc voltage; and
- second means (20) for continuously measuring the arc current,
characterized in that:
- said valve (9) for regulating the plasma-generating gas is of the pneumatic-actuation type and is actuated by an electropneumatic positioner (44) associated with a pneumatic flow amplifier (49); and
- said control means (14), on the one hand, receive the arc-voltage and arc-current measurements delivered respectively by said first and second measuring means (19, 20) and, on the other hand, deliver, to said rectifier (4) and to said electropneumatic positioner (49) respectively, arc-current and plasma-generating-gas flow rate reference values calculated according to a program, as a function of an electrical reference power.

2. System according to Claim 1, characterized in that said electrical reference power is selected and entered into said control means (14).

3. System according to Claim 1, in which said torch (1) is cooled by the circulation of a cooling fluid, characterized in that it includes additional third, fourth and fifth measuring means (24, 25, 26) for determining the flow rate, the inlet temperature in the torch and the outlet temperature of the torch of said cooling fluid and which supply their measurements to said control means (14), which establish said electrical reference power from a thermal reference power.

4. System according to Claim 3, characterized in that it includes additional sixth, seventh and eighth measuring means (21, 22, 23) which determine the flow rate, the temperature and the pressure of the plasma-generating gas in said circuit (8) and which supply their measurements to said control means (14), which take them into account in the establishment of said electrical reference power from said thermal reference power.

5. System according to either one of Claims 3 and 4, characterized in that said thermal reference power is selected and entered into said control means (14).

6. System according to either one of Claims 3 and 4, in which said torch is used to heat a blast (F), characterized in that it includes additional ninth, tenth and eleventh measuring means (27, 28, 29) which determine the flow rate, the temperature and the pressure of said blast and which supply their measurements to said control means (14) which establish said thermal reference power from a reference temperature for said blast heated by the plasma of said torch.

7. System according to Claim 6, characterized in that said reference temperature is selected and entered into said control means (14).
